# EUROPEAN PATENT APPLICATION

(11) **EP 1 502 899 A1**
(43) Date of publication of application: **02.02.2005**
(21) Application number: 04394049.3
(22) Date of filing: 29.07.2004
(51) Int. Cl.: C02F 3/32, C02F 3/06

(54) **A wastewater treatment system**

(30) Priority: 29.07.2003 IE 20030561
(71) Applicant: Kingspan Holdings (IRL) Limited, Kingscourt (County Cavan) (IE)
(72) Inventor: Norton, Michael c/o Klargester Environmental Ltd., Aylesbury Bucks HP22 5EW (GB)
(74) Representative: O'Brien, John Augustine

(57) **Abstract**

The invention provides a waste treatment unit (1) for the tertiary treatment of waste comprising a housing (2) having a base (22) and side walls means (25,26) extending upwardly from the base, a waste inlet (10), and a waste outlet (13). The housing comprises first and second internal dividers (11,12) extending across the housing and connected to the side wall means, the first divider (11) together with the side wall means defining a filtering section (3), the second divider (12) together with the first divider and the side wall means defining a settlement section (4), and the second divider together with the side wall means defining a discharge section. The inlet is located at the filtering section and the outlet is located at the discharge section, The housing further comprises a waste distribution means (6) for receiving waste entering the housing via the inlet and distributing the waste into the filtering section across a dispersed area.

## Description

### Introduction

The invention relates to a wastewater or effluent treatment system.

Wastewater from a domestic treatment device may be passed through a tertiary treatment system such as a filtration system to improve water quality before discharge. For example a reed bed system may be used to further treat the wastewater. However, a problem with current tertiary treatment systems is that they are often extensive and a large site needs to be excavated and prepared for installing the system. In addition the site must be sealed and isolated to prevent contamination of the surrounding area. Due to the requirements for site excavation a tertiary treatment system cannot easily be enlarged or extended should an increased demand arise. Also considerable skill is required in installing and setting up a tertiary treatment system to ensure that it treats the wastewater to the required water quality level before discharge.

The invention addresses these problems.

### Statements of invention

According to the invention there is provided a waste treatment unit for the tertiary treatment of waste comprising a housing having a base and side walls means extending upwardly from the base, a waste inlet, and a waste outlet, wherein
the housing comprises first and second internal dividers extending across the housing and connected to the side wall means, the first divider together with the side wall means defining a filtering section, the second divider together with the first divider and the side wall means defining a settlement section, and the second divider together with the side wall means defining a discharge section;
the inlet is located at the filtering section and the outlet is located at the discharge section; and
the housing further comprises a waste distribution means for receiving waste entering the housing via the inlet and distributing the waste into the filtering section across a dispersed area.

The invention provides a waste treatment unit divided internally into filtering, settlement and discharge sections. This system which is easy to install and effectively takes any guesswork out of laying a tertiary treatment system, since the housing comprises the required internal layout of sections, which are located relative to each other, and configured to optimise treatment of the wastewater prior to discharge into the environment.

In one embodiment the unit comprises fluid level adjustment means.

In another embodiment the level adjustment means is movably mounted to the second divider.

In a further embodiment the level adjustment means comprises a pipe.

In one embodiment the level adjustment means comprises a pipe which is movable between an upper position at which a high water level is maintained in the unit and a lower position at which the water is allowed to drain from the settlement section into the discharge section.

In another embodiment the pipe is mounted on a swivel joint.

The provision of a waste treatment unit having fluid level adjustment means has the advantage that it allows flexibility in controlling the fluid level which may be raised to help prevent rodent damage, reduce weed growth and encourage spring growth in young plants, and may be lowered when the bed surface becomes dry to reduce insects.

In another embodiment the inlet is provided in an upper portion of the side wall means.

In a further embodiment the outlet is provided in an upper portion of the side wall means.

In one embodiment the inlet is located at a level higher than the level of the outlet.

In another embodiment the inlet and outlet are configured to facilitate connection of the inlet of a similar waste treatment unit to the outlet of the waste treatment unit.

In a further embodiment the first divider is fixed to the housing.

In one embodiment a sealing means is provided between the first divider and the housing.

In another embodiment the second divider is fixed to the housing.

In a further embodiment a sealing means is provided between the second divider and the housing.

In one embodiment the first divider is of mesh.

In another embodiment the side wall means defines a top opening, wherein the base of the housing is arranged at a slope relative to the top opening such that when the top opening is set substantially level, the base of the housing is set at an orientation to facilitate hydraulic routing of waste through the unit.

This arrangement increases the ease of use of installation and use of the unit of the invention. If the top flange is set substantially level on installation then the base will be configured correctly to facilitate hydraulic routing of wastewater through the unit.
In a further embodiment the base of the housing slopes downwardly from the filtering section to the discharge section of the housing to facilitate hydraulic routing of waste through the unit.

In one embodiment the waste distribution means is fixed to the housing.

In another embodiment the waste distribution means is fixed to the housing at the periphery of the filtering section to distribute waste around the periphery of the filtering section.

In a further embodiment the waste distribution means comprises a form shaped to follow the contour of the side wall means defining the filtering section.

The provision of a waste distribution means configured to receive wastewater entering the housing via the inlet and to distribute the wastewater into the filtering zone has the advantage of facilitating flexibility in locating the inlet to allow for units to be connected together.

In one embodiment the unit has a substantially rectilinear form defined by rear and front end walls and side walls.

In another embodiment the waste distribution means comprises a substantially u-shaped form.

In a further embodiment the waste distribution means comprises a trough.

In one embodiment the trough comprises perforations to allow waste filter into the filtering section.

In another embodiment the filtering section is configured to contain media for the adsorption of phosphates.

In a further embodiment the filtering section is configured for use as a plant bed or reed bed.

In one embodiment there is provided one or more covering means configured for attachment to the housing to cover one or more of the filtering, settlement and discharge sections or the distribution means.

In another embodiment the housing is manufactured of an inert material

In a further embodiment the inert material is plastics, glass reinforced plastics, concrete or metal.

In one embodiment the internal dividers are formed integrally with the housing.

In another embodiment distribution means is integrally formed with the housing.

In a further embodiment the distribution means comprises attachment means to enable attachment to the housing at the filtering section.

According to another aspect of the invention there is provided a waste treatment system comprising at least two of the waste treatment units of the invention connected together.

In one embodiment the waste treatment system comprises two waste treatment units.

In another embodiment the waste treatment system comprises more than two waste treatment units.

In a further embodiment the waste treatment system comprises the units are connected together is series.

In one embodiment the units are connected together with a primary treatment device.

In another embodiment a first waste treatment unit is configured to allow a second unit to be located at a lower level than the first unit.

### Detailed Description of the Invention

The invention will be more clearly understood from the following description of some embodiments thereof, given by way of example only with reference to the accompanying drawings in which:-
Fig. 1 is a cut away perspective view of an effluent treatment system of the invention;
Figs. 2(a), 2(b) and 2(c) are views from above, the back and the front of a trough cover for an effluent treatment system of the invention;
Figs. 3(a), 3(b) and 3(c) are top, longitudinal and transverse views of a settlement zone cover for an effluent treatment system;
Fig. 4(a) is a plan view from above and Fig. 4(b) is a plan view from the front of effluent treatment systems connected in series;
Fig. 5(a) is a plan view from above and Fig. 5(b) the front of effluent treatment systems connected in series;
Fig. 6 is a view from above of effluent treatment systems connected in series in an alternative arrangement; and
Figs. 7(a), 7(b) and 7(c) are views from the inlet side, front and outlet side of the effluent treatment system of Fig. 6.

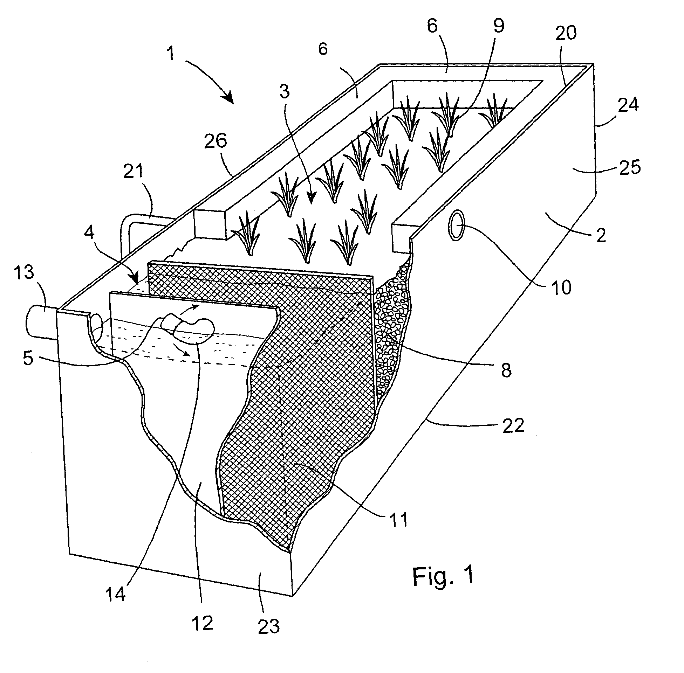

Referring to the Fig. 1 a waste treatment unit 1 comprises a housing 2 having a base 22, rear and front end walls 24, 23 and side walls 25 and 26 extending upwardly from the base 22 to define a top opening or top flange 20. The housing 2 comprises an inlet 10 through which waste to be treated enters the housing and an outlet 13 through which treated waste is discharged from the housing.

First and second internal dividers 11 and 12 connected to the inside of the housing divide it internally into zones or sections, namely, a filtering zone 3, a settlement zone 4 and a discharge zone 5. The housing further comprises a waste distribution trough 6 at the filtering zone, which receives wastewater entering via the inlet 10 and distributes the wastewater into the filtering zone 3 of the housing across a dispersed area.

The filtering zone 3 is filled with washed pea shingle 8 and planted with reeds 9 for use as a reed bed. The depth of the housing at the filtering zone is such as to accommodate root growth of reed plants. The filtering zone may also be filled with other types of filtering media for different treatments.

The base 22 of the housing is arranged at a slope relative to the top opening or top flange 20. When installed the top opening 20 is arranged substantially horizontally and the base 22 slopes downwardly from the rear end wall 24 of the filtering section to the front end wall 23 of the discharge section. The gradient of the base is between 2° and 10°, preferably 3°. The base is substantially planar and is configured to provide a hydraulic gradient for the hydraulic routing of waste through the unit.

The first divider 11 which divides the filtering zone from the settlement zone is comprised of mesh of the order of 2 - 10mm in size, which is fine enough to ensure that gravel does not pass from the filtering zone 3 into the settlement zone 4. This divider is connected to the side walls and base of the housing. The wall 11 may be connected to the housing by sealing means.

The second divider 12 which divides the settlement section from the discharge section is a solid wall connected to the housing and sealed to the housing to prevent the ingress of waste from the settlement section to the discharge section where they are connected.

The dividers 11 and 12 may be integrally formed with the housing, or fixed to the housing during the manufacturing process by mechanical bonding or other suitable means. It will be understood that in another embodiment the housing and dividers 11 and 12 may comprise attachment means to enable them to be assembled together.

The size of each of the filtering, settlement and discharge zones relative to each other as defined by the location of the internal dividers 11 and 12 provides the required retention time at each of the zones as the wastewater and treated wastewater passes through the zones successively. The unit is laid out and designed to facilitate treatment to the required quality levels prior to discharge into the environment.

The waste treatment unit 1 comprises water level adjustment means comprising a fluid level adjustment pipe 14 which is movably mounted to the divider 12. The level adjustment pipe is movable between an upper position at which a high water level is maintained in the unit and a lower position at which the water is allowed to drain from the settlement section into the discharge section. The pipe 14 is arranged on a swivel joint. Friction in the joint maintains the pipe at the position to which it is set. The pipe may be set at any position between the closed upper position and the open lower position. Fluid level is adjusted by turning the level adjustment pipe 14 to allow wastewater to drain to whatever the new lower level the decanting arm or pipe takes up after turning. In the embodiment shown, the level adjustment pipe 14 is arranged on an elbow joint fitting configured to change the flow direction of fluid by 90 degrees in this case.

The inlet 10 and outlet 13 comprise 110 mm PVCu sockets although it will be understood that sockets of any suitable size may be used with the size of the pipes being selected to correspond. Both the inlet 10 and outlet 13 are located near the top flange 20 of the housing, with the outlet being at a lower level than the inlet. In the present embodiment the outlet 13 is provided at 50 mm below the inlet which in turn is 50mm below the top flange 20. The arrangement of the inlet 10 and outlet 13 near the top of the housing 2 facilitates minimal hydraulic headloss across the module and prevents the discharge of solids which are effectively trapped in the housing.

As illustrated, the wastewater distribution trough 6 is located at the filter zone end of the housing near the top flange 20. The trough runs along a section of the interior perimeter housing near the top of the gravel layer. In the embodiment illustrated the inlet 10 is located in the side wall 25 of the housing. Water passing through the inlet 10 enters the trough 6 which extend along the side wall 25, the end wall 24 and side wall 26. The channel of the trough is substantially U-shaped in form. The base of the trough comprises perforations through which waste water is dispersed into the filtering zone. It will be appreciated that the housing may be of any suitable shape and the distribution means may comprise a form shaped to follow the contour of the side wall means defining the filtering section.

In the embodiment illustrated the trough is not integrally moulded or cast with the housing but connected to the housing. Different variations of the trough may be provided and fitted to the housing for use in different types of treatments. The trough is preformed of dimensions and shape suitable for attachment to the housing. The housing and trough comprise attachment means to enable the attachment of the trough thereto. In the embodiment illustrated the trough is connected to the housing at three sides of the filtering zone. Alternatively the housing may be manufactured with the trough integral thereto.

The trough 6 enables distribution of wastewater into the filtering zone from different directions, and at the periphery of the filtering zone. Such an arrangement which provides for greater efficiency in filtering the wastewater than is achievable when the effluent enters the filtering zone directly from the inlet pipe. The open trough configuration has the advantage that it enables access in the event of a blockage or build up of waste. The provision of a waste distribution trough arranged around a portion of the periphery of the filtering zone facilitates the location of the inlet at any point in the side walls or rear end wall of the housing at which the inlet would be connected to the trough. Flexibility in the location of the inlet is desirable when a series of waste treatment units 1 are to be connected end to end or side by side.

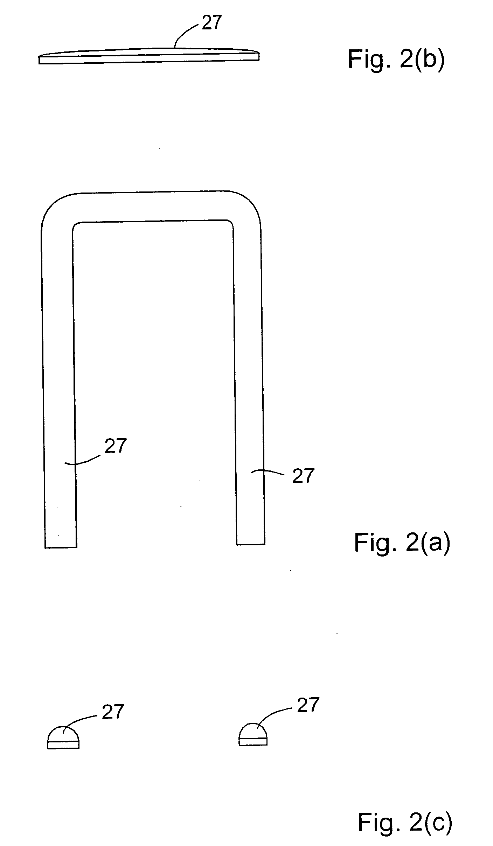

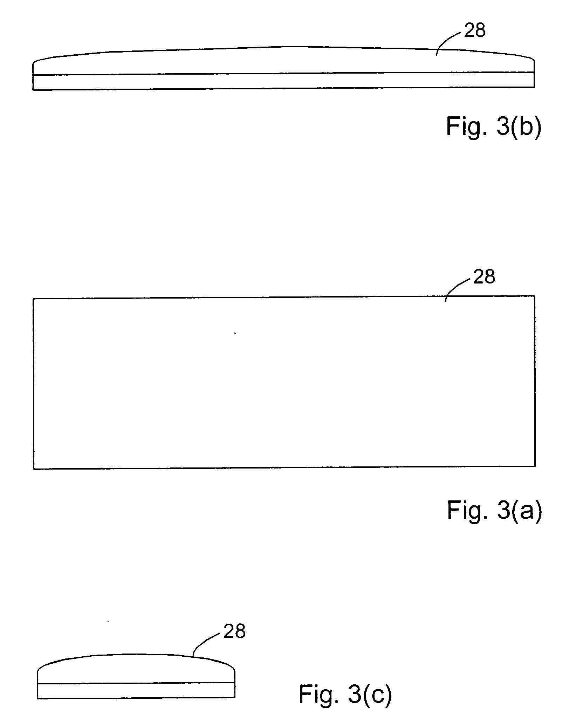

Referring To Figs. 2 and 3, the waste treatment unit 1 further comprises a trough cover 27 for covering the distribution trough 6, and a cover 28 for covering over the settlement and discharge zones. The covers are easily fitted and provide increased security by preventing access to wastewater in the trough or the treated effluent in the settlement and discharge zones, the covers also provide protection from frost. A further cover 29 (not shown) may also be provided for the filter zone which can be fitted in place to offer protection against frost in winter if the reeds have been harvested or if the unit 1 is being used for treatments other than reed bed treatments.

The housing 2 is manufactured of an inert rigid material. Any suitable material may be used for example a plastics or metal material, GRP or concrete. The housing may be precast or premoulded as an integral unit.

Removable lifting bolts 21 are provided spaced apart on the top flange 20 to enable handling and lifting of the housing when it is being installed.

The steps in a method of installing an effluent treatment unit1 of the invention include the following:
Step 1. Excavate and prepare the site for receiving the moulded housing. The site should be graded to receive the housing of the waste treatment unit, taking into account the gradient of the base 22 of the housing.
Step 2. Lift the housing 2 into place using removable lifting bolts 21. Ensure that the top flange 20 of the housing 2 is level to provide the necessary hydraulic gradient of the reed bed system. If the housing is not level performance of the system will be affected.
Step 3. Wash the gravel 8 prior to using to fill the filtering zone 3 of the housing 2. The gravel is washed to ensure that dust is removed. If dust is present it will block voids and affect hydraulic performance and effluent quality. The gravel should not be at a level higher than 100mm from the top flange 20 of the housing.
   After filling the filtering zone with gravel 8 a check should be made to ensure that the top flange 20 is still level since the filling process may cause the housing to move.
Step 4. Fit sockets to the inlet 10 and outlet 13 to receive inlet and outlet pipes. Fit pipes.
Step 5. Backfill the site.
Step 6. Fill the waste treatment unit/ reed bed 1 up to the outlet level with clean water.
Step 7. Reeds are planted with the root zone in contact with the static (outlet) water level of the reed bed in the unit 1.
Step 8. The level adjustment pipe 14 is adjusted to the upright vertical position and water is added to the planted filter zone. The wastewater level across the planted filter zone rises encouraging initial plant growth. The higher wastewater level also reduces potential damage from rodents.

When installed the unit 1 and pipes connecting the inlet and outlet of the unit to adjacent units or to the primary treatment unit are all laid below ground level. The outlet is located below ground level to discharge treated waste into the environment below ground level.

The waste treatment unit is an integral self contained unit which may be supplied as a kit comprising components required for installation for example the housing, trough (if provided separately) and covers. The user only needs to obtain the gravel and reed plants.

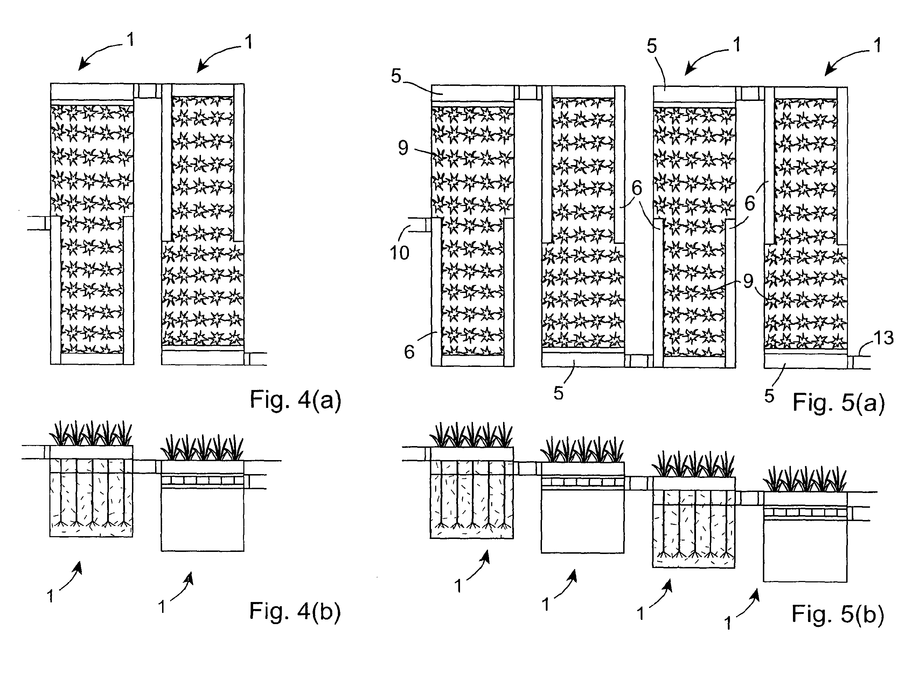

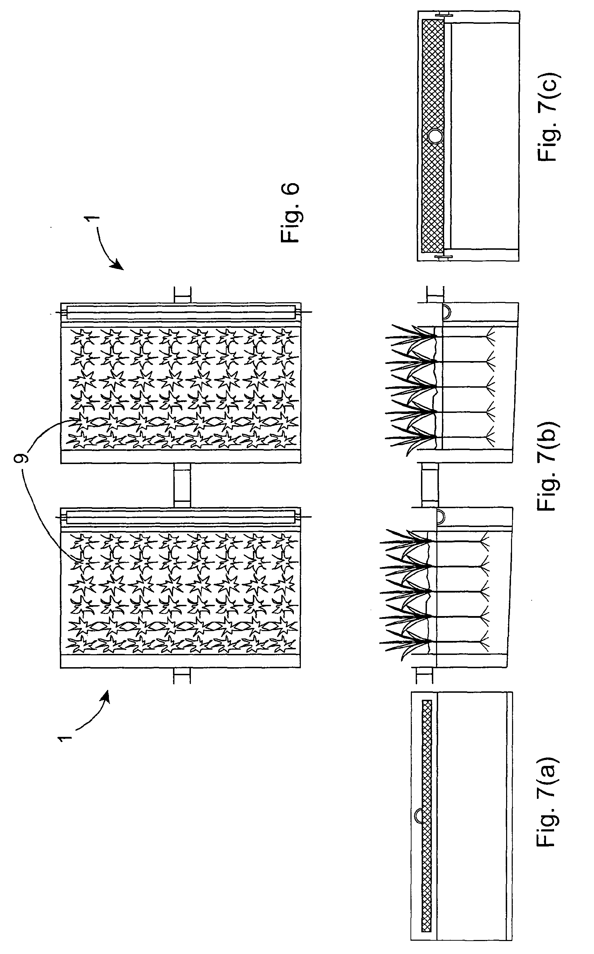

Referring to Figs. 4 to 7 a plurality of waste treatment units 1 of the invention may be installed connected in series to enable handling of different amounts of effluent depending on requirements. When as in the embodiment illustrated the outlet 13 is located at a level 50mm below the inlet 10 a fall of 50mm should be allowed between adjacent effluent treatment units 1. When installed in series the outlet 13 of a first effluent treatment unit/reed bed is connected to the inlet 10 of the next.

A reed bed system comprised of two reed bed units connected in series will typically handle the effluent from up to 6 persons and is appropriate for a single household.

The waste treatment units 1 may be arranged with the outlet connected directly by means of a short connection pipe to the inlet of the adjacent unit. Alternatively the inlet and outlet may be provided on opposite end walls of the unit in which case a plurality of units 1 in series may be arranged longitudinally end to end. Clearly the inlet and outlets may be provided in any of the external wall of the housing at the filtering and discharge sections respectively. The placement of a second unit at a lower level that the first unit allows for the outlet for the first unit to be aligned with the inlet of the second unit. Furthermore the placement of subsequent units at a lower level enables gravity flow of waste through the units.

The preformed waste treatment unit of the invention comprising means for defining the internal zones provides a unit in which the locations and relative dimensions of the zones are optimised for treatment of the wastewater prior to discharge into the environment. The system effectively takes any guesswork out of laying a tertiary treatment system in that the housing is prefabricated and comprises the required internal layout of sections, configured to provide suitable retention of wastewater at each section to optimise treatment of the wastewater passing therethrough.

The provision of such a system facilitates ease of laying a tertiary treatment system with the assurance of complying with environmental requirements for adequate treatment of waste prior to discharge. In addition the configuration of the housing is such that is facilitates correct installation for hydraulic routing of waste when the top of the housing is installed at a level, the base is set at the correct orientation for routing the wastewater therethrough.

The provision of a unit having discrete filter, settlement and discharge zones promotes plug flow. While the settlement zone between the filtering zone and discharge zone offers improved protection against solids carrying over and also offers the opportunity for the user to access the system to sample partially treated effluent.

In the unit of the invention the inlet and outlet are located near the top of the unit such that waste filters and flows near the top thereof of the unit in an arrangement which provides protection from short circuiting solids coming across the top of the bed, even in the event of flood or surge conditions.

In addition the invention provides a low maintenance reed bed system which requires little attention in the first years after installation. Thereafter it may be necessary to thin out the reeds and to harvest them at the end of the growing season.

The water level of the reed bed unit can be controlled with flexibility and ease by use of the adjustable level adjustment pipe. Adjustment of the pipe allows control of the static water level, which can be raised or lowered as required. When raised the higher water level can prevent rodent damage, reduce weed growth and encourage spring growth in young plants. When lowered the bed surface becomes dry which is often desirable in the summer months to reduce insects. The supply of means for effectively controlling the water level reduces requirements for maintenance of the system.

In use the unit is connected to a primary waste treatment device to treat the waste for release into the environment. Depending on the volume of waste to be treated and the capacity of the waste treatment unit being used one or more waste treatment units of the invention may be connected in series to ensure that the waste is treated as required before being released.

The provision of waste treatment system of waste treatment units the invention connected together provides for subsequent expansion of the system to cater for an increased amount of effluent if and as required. Further units may be added to a waste treatment system without interfering or needing to restructure the entire existing waste treatment or reed bed system. Should demand or output of effluent upstream from the waste treatment be increased it is possible to install additional waste treatment units in series with an existing waste treatment unit to enable handling of that increased output. It is possible to scale the system based on requirements. Since a larger system is comprised of a plurality of units the present invention provides excellent flexibility in scaling to meet demand.

Effectively the system of the invention is easily extendible, each unit effectively has a modular form.

In alternative embodiments different media may be used to achieve specific treatment performance objectives for example adsorption of phosphates.

The invention is not limited to the embodiments described but may be varied in construction and detail.

## Claims

1. A waste treatment unit for the tertiary treatment of waste comprising a housing having a base and side walls means extending upwardly from the base, a waste inlet, and a waste outlet, wherein
the housing comprises first and second internal dividers extending across the housing and connected to the side wall means, the first divider together with the side wall means defining a filtering section, the second divider together with the first divider and the side wall means defining a settlement section, and the second divider together with the side wall means defining a discharge section;
the inlet is located at the filtering section and the outlet is located at the discharge section; and
the housing further comprises a waste distribution means for receiving waste entering the housing via the inlet and distributing the waste into the filtering section across a dispersed area.

2. A waste treatment unit as claimed in claim 1, comprising fluid level adjustment means.

3. A waste treatment unit as claimed in claim 2, wherein the level adjustment means is movably mounted to the second divider.

4. A waste treatment unit as claimed in claim 3, wherein the level adjustment means comprises a pipe.

5. A waste treatment unit as claimed in claims 3 or 4 wherein the level adjustment means comprises a pipe which is movable between an upper position at which a high water level is maintained in the unit and a lower position at which the water is allowed to drain from the settlement section into the discharge section.

6. A waste treatment unit as claimed in claims 3 to 5 wherein the pipe is mounted on a swivel joint.

7. A waste treatment unit as claimed in any preceding claim wherein the inlet is provided in an upper portion of the side wall means.

8. A waste treatment unit as claimed in any preceding claim wherein the outlet is provided in an upper portion of the side wall means.

9. A waste treatment unit as claimed in any preceding claim wherein the inlet is located at a level higher than the level of the outlet.

10. A waste treatment unit as claimed in any preceding claim wherein the inlet and outlet are configured to facilitate connection of the inlet of a similar waste treatment unit to the outlet of the waste treatment unit.

11. A waste treatment unit as claimed in any preceding claim, wherein the first divider is fixed to the housing

12. A waste treatment unit as claimed in any preceding claim, wherein a sealing means is provided between the first divider and the housing.

13. A waste treatment unit as claimed in any preceding claim, wherein the second divider is fixed to the housing.

14. A waste treatment unit as claimed in any preceding claim, wherein a sealing means is provided between the second divider and the housing.

15. A waste treatment unit as claimed in any preceding claim, wherein the first divider is of mesh.

16. A waste treatment system as claimed in any preceding claim wherein the side wall means defines a top opening, wherein the base of the housing is arranged at a slope relative to the top opening such that when the top opening is set substantially level, the base of the housing is set at an orientation to facilitate hydraulic routing of waste through the unit.

17. A waste treatment unit as claimed in claim 16, wherein the base of the housing slopes downwardly from the filtering section to the discharge section of the housing to facilitate hydraulic routing of waste through the unit.

18. A waste treatment unit as claimed in any preceding claim, wherein the waste distribution means is fixed to the housing.

19. A waste treatment unit as claimed in any preceding claim, wherein the waste distribution means is fixed to the housing at the periphery of the filtering section to distribute waste around the periphery of the filtering section.

20. A waste treatment unit as claimed in any preceding claim wherein the waste distribution means comprises a form shaped to follow the contour of the side wall means defining the filtering section.

21. A waste treatment unit as claimed in any preceding claim having a substantially rectilinear form defined by rear and front end walls and side walls.

22. A waste treatment unit as claimed in any preceding claim wherein the waste distribution means comprises a substantially u-shaped form.

23. A waste treatment unit as claimed in any preceding claim wherein the waste distribution means comprises a trough.

24. A waste treatment unit as claimed in claim 23, wherein the trough comprises perforations to allow waste filter into the filtering section.

25. A waste treatment unit as claimed in any preceding claim wherein the filtering section is configured to contain media for the adsorption of phosphates.

26. A waste treatment unit as claimed in any preceding claim wherein the filtering section is configured for use as a plant bed or reed bed.

27. A waste treatment unit as claimed in any preceding claim comprising one or more covering means configured for attachment to the housing to cover one or more of the filtering, settlement and discharge sections or the distribution means.

28. A waste treatment unit as claimed in any preceding claim wherein the housing is manufactured of an inert material

29. A waste treatment unit as claimed in any preceding claim wherein the inert material is plastics, glass reinforced plastics, concrete or metal.

30. A waste treatment unit as claimed in any preceding claim wherein the internal dividers are formed integrally with the housing.

31. A waste treatment unit as claimed any preceding claim, wherein the distribution means is integrally formed with the housing.

32. A waste treatment unit as claimed in of claims 1 to 30, wherein distribution means comprises attachment means to enable attachment to the housing at the filtering section.

33. A waste treatment system comprising at least two of the waste treatment units as claimed in any of claims 1 to 32 connected together.

34. A waste treatment system as claimed in claim 33 comprising two waste treatment units.

35. A waste treatment system as claimed in claim 33 comprising more than two waste treatment units.

36. A waste treatment system as claimed in claims 33 to 35, wherein the units are connected together is series.

37. A waste treatment system as claimed in claim 33 to 36, wherein the units are connected together with a primary treatment device.

38. A waste treatment system as claimed in claims 33 to 37 wherein a first waste treatment unit is configured to allow a second unit to be located at a lower level than the first unit.
